(19) Europäisches Patentamt

European Patent Office

Office européen des brevets

(11) **EP 0 973 016 A2**

(12) **EUROPÄISCHE PATENTANMELDUNG**

(43) Veröffentlichungstag:
**19.01.2000 Patentblatt 2000/03**

(51) Int. Cl.[7]: **G01F 15/06**

(21) Anmeldenummer: **99119844.1**

(22) Anmeldetag: **08.04.1994**

(84) Benannte Vertragsstaaten:
**AT BE CH DE DK ES FR GB GR IE IT LI LU MC NL PT SE**

(30) Priorität: **20.04.1993 DE 4312837**
**20.04.1993 DE 4312841**

(62) Dokumentnummer(n) der früheren Anmeldung(en) nach Art. 76 EPÜ:
**94105427.2 / 0 621 464**

(71) Anmelder:
**Peter Lancier**
**Maschinenbau-Hafenhütte GmbH & Co. KG**
**48167 Münster (DE)**

(72) Erfinder:
- **Vemmer, Helmut Dipl.-Ing.**
  **42329 Wuppertal (DE)**
- **Wernsmann, Alfons Dipl.-Ing.**
  **48612 Horstmar (DE)**
- **Jahnk, Volker Dipl.-Ing.**
  **48145 Münster (DE)**

(74) Vertreter:
**Hoffmeister, Helmut, Dr. Dipl.-Phys.**
**Patentanwalt**
**Goldstrasse 36**
**48147 Münster (DE)**

Bemerkungen:
Diese Anmeldung ist am 07 - 10 - 1999 als Teilanmeldung zu der unter INID-Kode 62 erwähnten Anmeldung eingereicht worden.

(54) **Vorrichtung zur Messwertübertragung zwischen Sensoren und einer Überwachungseinheit**

(57)  Um eine einfache und genaue Übertragung von Meßwerten von weit entfernt angeordneten Mikrobrückenluftstromsensoren (12) zu einer Überwachungseinheit (UE) zu ermöglichen, bildet ein erster Operationsverstärker (116A), der zu einer Signalleitung (PVM) und einer Steuerleitung (R-EEN) führt, eine spannungsgesteuerte Stromquelle, dessen Ausgangsstrom durch die Dioden eines ersten und eines zweiten Optokopplers (O117, O117A) geleitet wird. Die Spannung am Anschluß (6) eines dritten Optokopplers (117B), der zu einer SYNC-Leitung (SYNC) führt, folgt der Spannung am Anschluß (5). Ein Bussystem (BUS) ist über ein Netzteil (V75, V76, V77, V78, V94, V95, V96, R43, R44, C64) am Kollektor des Transistors des ersten Optokopplers (117) und am Ausgang der Diode einen vierten Optokopplers (O117) angeschlossen und mit einer Synchronisationsspannung (UA TX) beaufschlagt.

An einer Mikrorechnereinheit (MP) sind die Sensoren (12), die SYNC-Leitung (SYNC), die Signalleitung (PVM) und die Steuerleitung (R-EEN) angeordnet. Mit der Mikrorechnereintheit (MP) wird

a) jeder Mikrobrückenluftstromsensor (12) abgefragt und ein Meßwert mit einer pulsweiten-modulierten Spannung im Zeitfenster entsprechend seiner zugeordneten Adresse auf die Signalleitung (PVM) gelegt und

b) anhand eines mit Hilfe von Widerständen (R39, R38) erzeugten Zählstroms über die SYNC-Leitung (SYNC) das Anliegen der Synchronisationsspannung (UATX) erkannt, so daß dem Bussystem (BUS) ein Sendestrom entnehmbar und als der die Meßgröße darstellende Wechselstromanteil des Meßwertes zur Überwachungseinheit (ÜE) übertragbar ist.

**Beschreibung**

Die Erfindung betrifft eine Vorrichtung zur Meßwertübertragung zwischen Sensoren und einer Über- wachungseinheit mit einem ersten Operations- verstärker, dessen Ausgangsstrom durch die Dioden eines ersten und eines zweiten Optokopplers an Masse geleitet ist und dessen invertierender Eingang am Emitter des Transistors des zweiten Optokopplers, dessen Kollektor an Potential geführt ist, an einem ersten an Masse liegenden Widerstand und an einem ersten Kondensator, der zu seinem Ausgang führt, angeordnet ist.

Eine ähnliche Vorrichtung ist aus der DE-A-4 024 002 bekannt. Die Sensoren, die sich in großer Entfernung zu einem Überwachungssystem befinden, sind mit einem Bussystem verbindbar. An dieses Bussystem können die Sensoren angeschlossen werden. Jeder Sensor verursacht einen Strom, der im Sendestrom einen Gleichstromanteil enthält. Wegen der großen Entfernung der Sensoren reicht der Gleichstromanteil nicht mehr aus, um die Elektronik zu versorgen, so daß die durch die Überwachungseinheit zu überwachende Geräte und Einheiten in ihrer Funktion gefährdet sind und deshalb eine eigene Stromversorgung benötigen.

Aus der oben genannten DE-A-4 024 002 ist ein NF-Übertrager mit galvanischer Trennung bekannt. Ein Frequenzsignal mit einer Frequenz von 300 - 3000 kHz wird von einem Operationsverstärker verstärkt und steuert zwei in Reihe liegende Fotodioden an, die ein dem NF-Signal entsprechendes Signal abgeben, das von zwei Fototransistoren empfangen und in ein elektrisches Signal umgewandelt wird. Am ersten Fototransistor steht das Ausgangssignal an. Das elektrische Signal des zweiten Transistors wird auf den invertierenden Eingang des Operationsverstärkers zurückgeführt und wirkt sich verstärkend auf die Kennlinie des NF- Übertragers aus.

Nachteilig ist, daß mit dem NF-Übertrager keine Übertragung der von weit entfernten Sensoren aufgenommenen Meßwerte zu einer Übertragungseinrichtung möglich ist. Zwar wird durch die Fotodioden und Transistoren das Signal entkoppelt. Sie werden aber für die Realisierung einer steuerbaren Stromsenke genutzt. Dar Verstärkt hat lediglich die Aufgabe, durch seine gegenkoppelnde Wirkung die Kennlinie des NF- Übertragers zu linearisieren.

Weiterhin ist aus der DE-B-3 720 996 eine Schaltungsanordnung für einen potentialmäßig abgekoppelten Drehzahlregler bekannt. Auf den invertierten Eingang eines Operationsverstärkers wird ein Vergleichswert eines Drehzahl-Soll- und eines Drehzahl- Ist-Wertes gegeben. Im Ausgangskreis des Operationsverstärkers sind zwei in Reihe geschaltete Luminiszenzdioden angeordnet. Ein Optokoppler dient der Signalübertragung, der andere wirkt mit seinem Fototransistor, der einen Arbeitswiderstand im Kollektorstrang hat, über einen Rückführweg, in den ein RC- Glied eingefügt ist, auf den invertierten Eingang des Verstärkers.

Auch diese Lösung eignet sich nicht für eine Übertragung von Meßwerten von weit entfernt angeordneten Sensoren zu einer Überwachungseinrichtung, auch wenn eine Potentialtrennung vorgenommen wird. Die gegenkoppelnde Wirkung des Verstärkers dient hier lediglich der Linearisierung des Signals. Dabei wird das rückgeführte Steuersignal für einen die Regelcharakteristik bestimmende Aufbereitung verwendet.

Die DE-B-4 016 400 gibt eine Einrichtung zur Überwachung von Sensorstellen mit einer drahtlosen Übertragung von Daten an, bei der die Überwachung zwischen Sendern und Empfängern durch Infrarot-Licht erfolgt. Die Einrichtung wird dabei als Sicherheitseinrichtung eingesetzt. Sie eignet sich zur Übertragung von Daten zwischen beweglichen Teilen, die sich im Abstand von wenigen Metern zueinander befinden.

Aus der DE-A-3-445 521 ist ein Schnittstellenbaustein zur symmetrischen Übertragung von Datenstationen in einem Datennetzwerk mit separaten Stromversorgungen für die einzelnen Busstationen bekannt. Hier werden die Signale von einem Schnittstellenbaustein über ein Zweidraht-Bus-System übertragen. Als Mittel zur Überbrückung der Busstation wird eine ODER-Schaltung, die von einem vom Differenzempfänger des Schnittstellenbausteins abgeleiteten, über ein RC-Glied verzögerten Signal und von einem durch einen parallel zum Eingang des Differenzverstärkers geschalteten Optokopplers erzeugten Signal beaufschlagt ist. Diese Schnittstelle eignet sich nur für die Übertragung digitaler Signale.

Es ist auch bekannt, eine gemessene Spannung potentialfrei, elektrischisoliert auf einen Empfängerteil zu übertragen (Tietze, U., Schenk, Ch.: Halbleiter-Schaltungstechnik, Siebente, überarbeitete Auflage, Springer-Verl., 1985, S. 781 - 783). Dabei wird mit Optokopplern eine Gleichspannung direkt übertragen. Um den Linearitätsfehler der Optokoppler auszugleichen, wird mit Hilfe von Operationsverstärkern der Strom durch Leuchtdioden so geregelt, daß ein Photostrom gleich einem Sollwert ist. Eine Gegenkopplungsschleife wird dann über einen Referenzkoppler geschlossen. Da der Photostrom sein Vorzeichen nicht ändern kann, wird ein konstanter Anteil überlagert, um bipolare Eingangssignale verarbeiten zu können.

Herausgestellt werden hier nur ganz allgemein die Vorteile einer optischen Kopplung gegenüber einer induktiven, z.B. durch einen Transformator, so daß die so beschriebene potentialfreie Kopplung nicht einfach für eine Übertragung von Meßwerten zwischen Sensoren und einer Überwachungseinheit mit einem Bussystem übernehmbar ist, soll es nicht weiterhin zu einer Gefährdung der durch die Überwachungseinheit zu überwachenden Geräte und Einheiten in der Funktion kommen.

Es stellt sich die Aufgabe, eine Vorrichtung für eine potentialfreie Übertragung der eingangs genannten Art so weiterzuentwickeln, daß eine einfache und genaue Übertragung der Meßwerte von weit entfernt angeordneten Sensoren zu einer Überwachungseinheit möglich ist.

Erfindungsgemäß wird die Aufgabe dadurch gelöst,

daß der nichtinvertierende Eingang des ersten Verstärkers über einen zweiten Widerstand und ein Tiefpaßfilter eine Signalleitung und über einen dritten Widerstand an eine Steuerleitung geführt ist,
daß der Emitter des Transistors des ersten Optokopplers mit den in Reihe geschalteten Dioden eines zweiten und eines dritten Optokopplers verbunden ist, deren Emitter an Masse und deren Kollektoren auf eine SYNC-Leitung geführt sind,
daß ein Bussystem über ein Netzteil am Kollektor des Transistors des ersten Optokopplers und am Ausgang der Diode des vierten Optokopplers liegt und mit einer Synchronisationsspannung beaufschlagt ist,
daß an einer Mikrorechnereinhait ein Mikrobrückenluftstromsensor, die SYNC-Leitung, die Signalleitung und die Steuerleitung angeordnet sind und mit der Mikrorechnereinheit

a) der Mikrobrückenluftstromsensor abgefragt wird und ein Meßwert mit einer pulsweitenmodulierten Spannung im Zeitfenster entsprechend seiner zugeordneten Adresse auf die Signalleitung gelegt wird und
b) anhand eines mit Hilfe des zweiten und des dritten Widerstandes erzeugten Zählstroms über die SYNC-Leitung das Anliegen der Synchronisationsspannung erkannt wird, so daß dem Bussystem ein Sendestrom entnehmbar und als der die Meßgröße darstellende Wechselstromanteil des Meßwertes zur Überwachungseinrichtung übertragbar ist.

Das Bussystem ist ein 2-Draht-Bussystem, über das die Mikrobrückenluftstromsensoren im Zeitmultiplexverfahren ihre Meßwerte zur Überwachungseinheit übertragen.

In weiterer Ausgestaltung der Erfindung befinden sich die vier Optokoppler in einem integrierten Schaltkreis.

Vorteilhaft ist es, wenn zwischen dem Ausgang des ersten Operationsverstärkers und dem ersten Eingang der ersten Diode des ersten Optokopplers ein vierter Widerstand angeordnet ist.

Vorteilhaft ist es, wenn an der SYNC-Leitung ein an Masse liegender zweiter Kondensator und ein an Potential liegender fünfter Widerstand angeordnet ist.

Vorteilhaft ist es, wenn das Tiefpaßfilter aus einem zweiten Operationsverstärker, einem sechsten und einem siebenten Widerstand und einem dritten und vierten Kondensator besteht, wobei

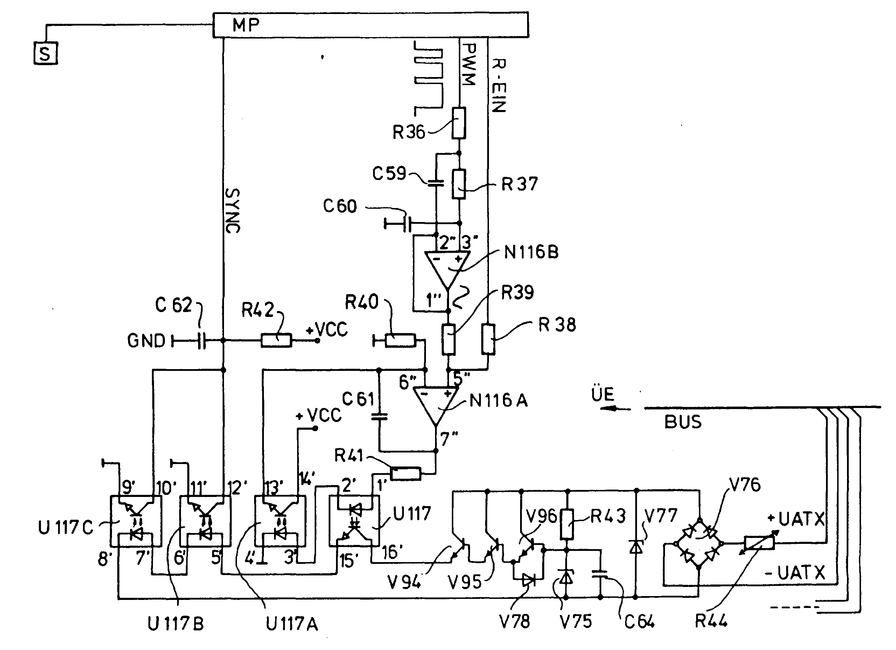

- der sechste und der siebente Widerstand in der PWM-Leitung am nichtinvertierenden Eingang liegen,
- der dritte Kondensator zwischen diesen beiden Widerständen und dem invertierenden Eingang und
- der vierte Kondensator am nichteinvertierenden Eingang des zweiten Operationsverstärkers liegt,

wobei der invertierende Eingang zum Ausgang des zweiten Operationsverstärkers führt, der mit dem vor dem invertierenden Eingang des ersten Operationsverstärkers liegenden vierten Widerstand verbunden ist.
Die sich mit der Erfindung ergebenden Vorteile werden im Zusammenhang mit einem Ausführungsbeispiel, das in der Zeichnung schematisch dargestellt ist, beschrieben.
Für Mikrobrückenluftstromsensoren, im folgenden Sensoren 12, die sich in großer Entfernung zu einer Überwachungseinheit ÜE befinden, wird vorteilhafterweise ein 2-Draht-Bussystem BUS eingesetzt.
Wie eine in der Zeichnung dargestellte Schnittstellen-Anordnung zeigt, ist das 2-Draht-Bussystem sowohl über einen PTC-Widerstand R44 als auch direkt mit den Punkten einer Gleichrichter-Brücken-Schaltung V76 verbunden. Parallel zu den anderen beiden Brückenzweigen ist eine Zenerdiode V77 und die Reihenschaltung eines Widerstandes R43 und einer Zenerdiode V75, zu der parallel ein Kondensator C64 liegt, angeordnet. Davor sind drei Transistoren V94, V95 und V96 angeschlossen, deren Kollektoren mit dem Widerstand R43 verbunden sind. Zwischen Emitter und der Basis des Transistors V96 ist ein Gleichrichter V78 angeordnet. Außerdem ist der Emitter des Transistors V96 mit der Basis des Transistors V95 und der Emitter des Transistors V95 mit der Basis des Transistors V94 verbunden. Der Emitter des Transistors V94 liegt am Eingang 16' des Optokopplers U117. Dieser Optokoppler ist mit seinem Anschluß 1' über einen Widerstand R41 mit einem Ausgang 7'' eines Operationsverstärkers N116A verbunden. Am nichtinvertierenden Eingang 5'' ist über einen Widerstand R39 über einen Ausgang 1'' ein weiterer Operationsverstärker N116B angeordnet. Am nichtinvertierenden Eingang 3'' ist in einer PWM-Leitung PWM ein Widerstand R36 und ein Widerstand R37 geschaltet. Zwischen beiden Widerständen R36 und R37 ist ein Kondensator C59 auf den invertierenden Eingang 2'' des Operationsverstärkers N116B geführt. Dieser Eingang 2'' ist ebenfalls mit dem Ausgang 1'' des Operationsverstärkers N116B verbunden. Darüber hinaus ist zwischen dem Widerstand R39 und dem nichtinvertierenden Eingang 5'' des Operationsverstärkers N116A ein Widerstand R38 in eine Steuerstromleitung R-EIN geschaltet. Der invertierende Eingang 6'' des Operationsverstärkers N116A führt zu einem an Null-Potential liegenden Widerstand R40, über einen Kondensator C61 an den Ausgang 7'' und zu einem Anschluß 13' des Optokopplers U117A, dessen Anschluß 14' an einem Potential +VCC liegt. Dessen Anschluß 3' ist mit dem Anschluß 2' des Optokopplers U117 verbunden, während der Anschluß 4' an die ein Null-Potential bildende Masse geführt ist. Zum Anschluß 15 des Optokopplers U117 führt eine Verbindung zum Anschluß 5 des Optokopplers U117B, dessen Anschluß 6' zum Anschluß 7' eines Optokopplers U117C führt. Der Anschluß 8' des Optokopplers U117 führt an die Zenerdiode V75, den Kondensator V64, die Zenerdiode V77 und die Gleichrichter-Brückenschaltung V76. Während die Ausgänge 11 und 9 der Optokoppler U117B und U177C an die Null-Potential führende Masse gelegt sind, sind die Anschlüsse 10' und 12' sowohl über einen Kondensator C62 an Masse als auch über einen Widerstand R42 an Potential und eine SYNC-Leitung SYNC geführt. Die Steuerleitung R-EIN, die PWM-Leitung PWM und die SYNC-Leitung SYNC sind mit einer Mikroprozessoreinrichtung MP verbunden. An diese Mikroprozessoreinrichtung MP, die auch mit 41 bezeichnet ist, ist der Sensor 12 angeschlossen. Jeder der Optokoppler U117, U117A, U117B und U117C bestehen aus einem Transistor und einer Diode, die als Fototransistor und als Fotodiode bekannterweise zusammen angeordnet und zusammenwirken.

An das Zwei-Draht-Bussystem BUS können bis 127 Sensoren 12 angeschlossen werden, die in einem Zeitmultiplexverfahren ihre Meßergebnisse übertragen. Die Meßwertübertragung erfolgt dabei mit Hilfe eines Wechselstroms, dessen Frequenz die Meßgröße darstellt. Der Wechselstrom wird dem Zwei-Draht-Bussystem entnommen. Die Übertragung der Frequenzen erfolgt im Zeitmultiplexverfahren. Dazu wird jedem der Sensoren 12 eine andere Adresse zugeordnet, die den Zeitpunkt der Übertragung (Zeitfenster) definiert. Die Länge eines Zeitfensters wird mit einer bestimmten Zeitdauer, z.B. zwei Sekunden, bestimmt. Danach beträgt der Beginn des Zeitfensters Adresse x Zeitdauer. Die Synchronisation aller Sensoren wird durch ein Anlegen einer Spannung UATX ausgelöst.

Jeder der Sensoren 12 verursacht einen Strom in dem Zwei-Draht-Bussystem BUS. Dabei wird unterschieden:

a) Zählstrom,
das ist der Strom, der von jedem Sensor 12 verursacht wird, wenn er nicht sendet. Er addiert sich entsprechend der Anzahl der Sensoren und verursacht einen Spannungsabfall auf dem Zwei-Draht-Bussystem BUS und begrenzt u.a. die Reichweite. Er sollte möglichst klein sein, z.B. zwischen 50 und 200 µA je Schnittstellenheit.
b) Sendestrom,
er tritt nur während des oben beschriebenen Zeitfensters auf und setzt sich zusammen aus einem Gleichstromanteil und einem Wechselstromanteil. Der Gleichstromanteil kann nur in bestimmten Fällen zur Stromversorgung des Sensors genutzt werden. Der Wechselstromanteil hingegen stellt die Meßgröße dar. Der Sendestrom wird dem Zwei-Draht-Bussystem entnommen und tritt immer im Zeitfenster nur einmal auf.

Bei Sensoren 12, bei denen der Gleichstromanteil des Sendestroms nicht zur Versorgung der Elektronik ausreicht, muß eine zusätzliche Spannungsversorgung vorgesehen werden. Die Spannungsversorgungen für die Strömungsmeßeinrichtungen mit Mikrobrückenluftstromsensor können alle auf unterschiedlichen Potentialen liegen und dürfen deshalb nur über eine Potentialtrennung mit dem 2-Draht-BUS verbunden werden. Hierzu bildet der Operationsverstärker N116A eine spannungsgesteuerte Stromquelle, dessen Ausgangsstrom durch die Dioden der Optokoppler U117 und U117A geleitet wird. Die Spannung am Anschluß 6 des Optokopplers U117B folgt der Spannung am Anschluß 5. Der Strom durch den Widerstand R40 beträgt damit

$$I40 = \frac{U}{R40.}$$

Der Strom durch den Widerstand R41 ist nicht linear, weil der Optokoppler U117A einen nichtlinearen Stromwandler darstellt. Der nichtlineare Strom durch R41 wird durch den Optokoppler U117 übertragen und erscheint linear am Ausgang, wenn er die gleiche Nichtlinearität besitzt wie U117A. Dies ist hinreichend gegeben, weil sich alle vier Optokoppler U117, U117A, U117B und U117C in einem integrierten Schaltkreis befinden und außerdem die Spannung am Kollektor von U117 durch V75, V76, V77, V78, V94, V95, R43, R44, C64 so groß gewählt ist, wie die Spannung am Kollektor des Optokopplers U117A. Mit Hilfe dieses so beschriebenen Schaltungsteils der Schnittstellenanordnung können also Ströme übertragen werden. Dieses Teil stellt somit eine spannungsgesteuerte, potentialfreie Stromsenke dar.

Das Tiefpaßfilter, das durch den Operationsverstärker N116B, die Widerstände R36 und R37 sowie die Kondensatoren C59 und C 60 gebildet wird, wandelt eine Pulsweiten modulierte Spannung in eine sinusförmige Spannung mit der Frequenz zwischen 1000 - 2000 Hz um, die über den Widerstand R39 an die durch den Operationsverstärker N116A gebildete Stromquelle geleitet wird. Mit Hilfe der Widerstände R38 und R 39 wird eine Gleichspannung am Anschluß 5'' des Operationsverstärkers N116A erzeugt, deren Größe den Zählstrom definiert. Die PWM-Leitung PWM hat dann das Potential +VCC und die Ruhestromleitung R-EIN das Potential GND.

Mit den Optokopplern U117B und U117C wird erkannt, ob der Zählstrom fließt, also UATX aufgeschaltet ist. Deren Dioden sind in Reihe geschaltet, während deren Kollektoren paralell geschaltet sind. Daraus ergibt sich eine größere Empfindlichkeit. Da alle Optokoppler U117, U117A, U117B und U117C zu einem integrierten Schaltkreis gehören, ergibt sich eine gute Fehlerkompensation auch bezüglich von Temperaturfehlern.

Der Brückengleichrichter V76, die Zenerdiode V77, der Kondensator C64, die Zenerdiode V75 und die Diode V78, der Widerstand R43 und die Transistoren V94, V95 und V96 bilden ein Netzteil. Der PTC-Widerstand R44 dient dabei als Kurzschlußschutz, der Brückengleichrichter V76 als Verpolungsschutz, die Zenerdiode V77 im Zusammenwirken mit R44 und dem Brückengleichrichter V76 als Überspannungsschutz. Die Spannungsreferenz wird aus der Zenerdiode V75, dem Widerstand R43 und dem Kondensator C64 gebildet. Die Transistoren V94 bis V96 sind als Emitterfolger geschaltet.

Die Mikroprozessoreinheit MP (41) kann deshalb potentialfrei Meßergebnisse von den Sensoren auf das Zwei-Draht-Bussystem übertragen. Das ist nur deshalb möglich, weil die Schnittstelle eine Potentialtrennung mit folgenden Eigenschaften vornimmt:

1. Erkennung der Aufschaltung der Sychronisationsspannung UATX bei möglichst kleinem Zählstrom, und
2. Übertragung des Wechselstromanteils des Sendestroms mit konstanter Amplitude und geringem Klirrfaktor.
3. Im Gegensatz zu einer Transformatorkopplung ist nicht nur eine Übertragung der Wechselströme vom Sensor zur Überwachungseinheit, sondern in Gegenrichtung eine Übertragung der Synchronisationsgleichspannung möglich.

Durch die Optokoppler ergeben sich darüber hinaus folgende Vorteile:

- genaueste Übertragungsmöglichkeit kleinster Ströme (ca. 5,0 mA), da starke Unlinearitäten der Optokoppler, z.B. aufgrund von Temperaturfehler der Optokoppler-Halbleiter im Gesamtsystem, über den Optokoppler U117A kompensiert werden und
- bidirektionale galvanische Trennung vom Zwei-Draht-Bussystem.

Mit dieser potentialtrennenden Sensorschnittstelle ist es möglich, Meßwerte zu einer bis zu 100 km weit entfernten Überwachungseinheit zu übertragen. Sie ist in der Lage, mit Hilfe der von der Überwachungseinheit aufgeschalteten Synchronisationsspannung (UATX = 20 . . . 120V), einen den Meßwert repräsentierenden sinusförmigen Modulationsstrom (typisch: iss=3,64mA, f= 1000 . . .2000 Hz) fließen zu lassen.

Außerdem ist sie in der Lage, einen Ruhestrom, auch Zählstrom genannt, (typisch: I=0,2 mA, DC) einzustellen, mit dessen Hilfe das Aufschalten der Synchronisationsspannung und somit der Beginn des Zeitmultiplexens erkannt wird.

Nur durch die Kombination mehrerer Maßnahmen ist es möglich, einen so kleinen Strom exakt mit Optokopplern einzustellen bzw. zu erkennen.

Zu den Maßnahmen gehören:

a) Linearisierung der Optokopplerkennlinien und Minimierung der Temperaturfehler der Optokoppler U117 bis U117C. (Diese Maßnahme ist nicht nur wegen des sinusförmigen Modulationsstromes wichtig, sondern auch zur korrekten Einstellung und Erkennung des Ruhestromes von Bedeutung).
b) Vergrößerung der Empfindlichkeit durch die Reihenschaltung der Optokopplerdioden U117B und U117C sowie die Parallelschaltung der entsprechenden Fototransistoren.
c) Stabilisierung der Synchronistionsspannung mit einem Metzteil V 94, ... R44 von 20 ... 120V auf die gleiche Spannungshöhe wie Vcc (ca. 10V), damit sich auf beiden Seiten für die Fototransistoren gleiche Spannungsverhältnisse zwischen Kollektor und Emitter ergeben.

**Patentansprüche**

1. Vorrichtung zur Meßwertübertragung zwischen Mikrobrückenluftstromsensoren und einer Überwachungseinheit mit einem ersten Operationsverstärker (N116A), dessen Ausgangsstrom durch die Dioden eines ersten und eines zweiten Optokopplers (U117, U177A) an Masse (GND) geleitet ist und dessen invertierender Eingang (6")

am Emitter des Transistors des zweiten Optokopplers (U117A), dessen Kollektor an Potential (+VCC) geführt ist,
an einem ersten an Masse (GND) liegenden Widerstand (R40) und
an einem ersten Kondensator (C61), der zu einem Ausgang (7") führt, angeordnet ist,
dadurch gekennzeichnet,

daß der nichtinvertierende Eingang (5") des ersten Verstärkers (N116A) über einen zweiten Widerstand (R39) und ein Tiefpaßfilter (N116B, R36, R37, C59, C60) an eine Signalleitung (PWM) und über einen dritten Widerstand (R38) an eine Steuerleitung (R-EIN) geführt ist,
daß der Emitter des Transistors des ersten Optokopplers (U117) mit den in Reihe geschalteten Dioden eines zweiten und eines dritten Optokopplers (U117B, U117C) verbunden ist, deren Emitter an Masse (GND) und deren Kollektoren auf eine SYNC-Leitung (SYNC) geführt sind,

daß ein Bussystem (BUS) über ein Netzteil (V75, V76, V77, V78, V94, V95, V96, R43, R44, C64) an Kollektor des Transistors des ersten Optokopplers (U117) und am Ausgang der Diode des vierten Optokopplers (U117C) liegt und mit einer Synchronisationsspannung (UATX) beaufschlagt ist,

daß an einer Mikrorechnereinrichtung (MP) der Mikrobrückenluftstromsensor (12), die SYNC-Leitung (SYNC), die Signalleitung (PVM) und die Steuerleitung (R-EIN) angeordnet sind und mit der Mikrorechnereinrichtung (MP)

a) der Mikrobrückenluftstromsensor (12) abgefragt wird und ein Meßwert mit einer pulsweiten-modulierten Spannung im Zeitfenster entsprechend seiner zugeordneten Adresse auf die Signalleitung (PVM) gelegt wird und

b) anhand eines mit Hilfe des zweiten und des dritten Widerstandes (R39, R38) erzeugten Zählstroms über die SYNC-Leitung (SYNC) das Anliegen der Synchronisationsspannung (UATX) erkannt wird, so daß dem Bussystem (BUS) ein Sendestrom entnehmbar und als der die Meßgröße darstellende Wechselstromanteil des Meßwertes zur Überwachungseinheit (ÜE) übertragbar ist.

2. Vorrichtung nach Anspruch 1, dadurch gekennzeichnet, daß das Bussystem (BUS) ein 2-Draht-Bussystem ist, über das die Sensoren (12) im Zeitmultiplexverfahren ihre Meßwerte zur Überwachungseinheit übertragen.

3. Vorrichtung nach Anspruch 1 oder 2, dadurch gekennzeichnet, daß sich die vier Optokoppler (U117; U117A; U117B; U117C) in einem integrierten Schaltkreis befinden.

4. Vorrichtung nach wenigstens einem der Ansprüche 1 bis 3, dadurch gekennzeichnet, daß zwischen dem Ausgang (7") des ersten Operationsverstärkers (N116A) und dem ersten Eingang (1") der Diode des ersten Optokopplers (U117) ein vierter Widerstand (R41) angeordnet ist.

5. Vorrichtung nach wenigstens einem der Ansprüche 1 bis 4, dadurch gekennzeichnet, daß zwischen dem Ausgang (7") und dem invertierten Eingang (6") des ersten Operationsverstärkers (N116A) ein zweiter Kondensator (C61) angeordnet ist.

6. Vorrichtung nach wenigstens einem der Ansprüche 1 bis 5, dadurch gekennzeichnet, daß an der SYNC-Leitung (SYNC) ein an Masse (GND) liegender zweiter Kondensator (C62) und ein an Potential (+VCC) liegender fünfter Widerstand (R42) angeordnet ist.

7. Vorrichtung nach wenigstens einem der Ansprüche 1 bis 6, dadurch gekennzeichnet, daß das Tiefpaßfilter aus einem zweiten Operationsverstärker (N116B) einem sechsten und einem siebente Widerstand (R36; R37) und einem dritten und einem vierten Kondensator (C59; C60) besteht, wobei

- der sechste und der siebente Widerstand (R36; R37) in der PWM-Leitung (PWM) am nichtinvertierenden Eingang (3") liegen,
- der dritte Kondensator (C59) zwischen diesen beiden Widerständen (R36, R37) und dem invertierenden Eingang (2") und
- der vierte Kondensator (C60) am nichtinvertierenden Eingang (3") des zweiten Operationsverstärkers (N116B) liegt,

wobei der invertierende Eingang (2") zum Ausgang (1") des zweiten Operationsverstärkers (N116B) führt, der mit dem vor dem invertierenden Eingang (5') des ersten Operationsverstärkers (N116A) liegenden zweiten Widerstand (R39) verbunden ist.